# EUROPEAN PATENT APPLICATION

(11) **EP 4 443 029 A1**
(43) Date of publication of application: **09.10.2024**
(21) Application number: 22910033.4
(22) Date of filing: 20.12.2022
(51) Int. Cl.: F16K 1/00

(54) **SOLENOID VALVE**

(30) Priority: 23.12.2021 CN 202123359794 U
(71) Applicant: Zhejiang Dunan Artificial Environment Co., Ltd., Shaoxing Zhejiang 311835 (CN)
(72) Inventor: ZHANG, Wenrong, Shaoxing, Zhejiang 311835 (CN); JIN, Ju, Shaoxing, Zhejiang 311835 (CN); LI, Zhepeng, Shaoxing, Zhejiang 311835 (CN)
(74) Representative: HGF
(86) International application number: PCT/CN2022/140443
(87) International publication number: WO 2023/116721

(57) **Abstract**

Some embodiments of the present invention provide an electromagnetic valve. The electromagnetic valve includes: a valve cover and a valve core, the valve core being installed in the valve cover; a first sealing structure and a sealing sleeve, the sealing sleeve being installed at one end of the valve cover, and the first sealing structure being arranged at an end of the sealing sleeve close to the valve cover and forms a valve port; and a driving assembly, the driving assembly driving the valve core to move along an axial direction to open or close the valve port, there is a hardness difference between a part matched with the valve core on the first sealing structure and the valve core. The present invention solves the problem of medium leakage at the valve port easily occurring when a valve core blocks a valve port in the art known to inventors.

## Description

### Technical Field

The present invention relates to the technical field of electromagnetic valves, specifically to an electromagnetic valve.

### Background

At present, during the operation of an electromagnetic valve, a valve core has a non-communicated state of blocking a valve port and a communicated state of avoiding the valve port.

However, in the art known to inventors, when the valve core blocks the valve port, the valve core is in hard contact with the valve port, and there is a phenomenon of medium leakage at the valve port, which affects the operation reliability of the electromagnetic valve.

### Summary

Some embodiments of the present invention provide an electromagnetic valve to solve the problem of medium leakage at the valve port easily occurring when a valve core blocks a valve port in the art known to inventors.

In order to solve the above problem, the present invention provides an electromagnetic valve includes: a valve cover and a valve core, the valve core being installed in the valve cover; a first sealing structure and a sealing sleeve, the sealing sleeve being installed at one end of the valve cover, and the first sealing structure being arranged at an end of the sealing sleeve which is close to the valve cover so as to form a valve port; and a driving assembly, the driving assembly driving the valve core to move along an axial direction to open or close the valve port; there is a hardness difference between a part which is matched with the valve core on the first sealing structure and the valve core.

Applying the technical solution of this invention, a soft seal is formed between the valve core and the first sealing structure to achieve sealing at a joint between the valve core and the valve port, thereby preventing the medium entering the valve port from leaking through the joint between the valve core and the valve port and then affecting the operation reliability of the electromagnetic valve, and solving the problem of medium leakage at the valve port easily occurring when the valve core blocks the valve port in the prior art.

In some embodiments, the hardness of the first sealing structure is lower than the hardness of the valve core to form a soft seal.

In some embodiments, the hardness of the valve core is lower than the hardness of the first sealing structure to form a soft seal.

In some embodiments, the hardness of the first sealing structure is lower than the hardness of the sealing sleeve.

In some embodiments, the first sealing structure is made of one of rubber, silicone and plastic.

In some embodiments, the first sealing structure is limited between the valve cover and the sealing sleeve.

In some embodiments, the valve cover includes: a valve cover body; an annular plate, arranged on one side of the valve cover body which is away from the driving assembly and abutted against the sealing sleeve; and an annular step, arranged on an inner surface of the annular plate and abutted against the first sealing structure, the annular step and the annular plate being surrounded to form an installation space, and the first sealing structure being arranged in the installation space.

In some embodiments, the valve port includes a first hole section and a second hole section which are connected with each other, and the first hole section is communicated with an inner cavity of the sealing sleeve through the second hole section.

In some embodiments, the first hole section is a tapered hole, and the inner diameter of the tapered hole gradually decreases along a direction from the first sealing structure to the sealing sleeve.

In some embodiments, the driving assembly includes a first magnetic adsorption structure and a second magnetic adsorption structure, the valve core is connected with an end of the first magnetic adsorption structure which is away from the second magnetic adsorption structure, a through hole is arranged in the first magnetic adsorption structure, a balance hole is arranged in the valve core, and the balance hole is communicated with the through hole.

In some embodiments, the balance hole includes a first section close to the through hole and a second section away from the through hole, and the inner diameter of the second section is greater than the inner diameter of the first section.

In some embodiments, the electromagnetic valve further includes: a valve seat, the valve seat having an installation channel and a flow channel, and the valve cover, the sealing sleeve and the first sealing structure being all installed in the installation channel.

In some embodiments, the electromagnetic valve further includes: a second sealing structure, the second sealing structure being arranged between the sealing sleeve and the valve seat; or, a third sealing structure, the third sealing structure being arranged between the valve cover and the valve seat; or, a second sealing structure and a third sealing structure, the second sealing structure being arranged between the sealing sleeve and the valve seat, and the third sealing structure being arranged between the valve cover and the valve seat.

In some embodiments, the sealing sleeve includes a sealing sleeve body and an annular convex part arranged on an outer circumferential surface of the sealing sleeve body, the annular convex part has an annular groove, and the second sealing structure is arranged in the annular groove.

In some embodiments, when the first sealing structure is arranged at the end of the sealing sleeve close to the valve cover and forms the valve port, the first sealing structure is provided with a first matching part, the valve core is provided with a second matching part, one of the first matching part and the second matching part is a first protrusion, the other one of the first matching part and the second matching part is a first concave part, and the first protrusion extends into the first concave part and is matched with the first concave part in a limiting manner.

### Brief Description of the Drawings

The accompanying drawings of the specification, constituting a part of the present invention, are used for providing a further understanding of the present invention. The exemplary embodiments of the present invention and the descriptions thereof are used for explaining the present invention, and do not constitute an improper limitation on the present invention. In the accompanying drawings:
Fig. 1 illustrates a cross-sectional view of Embodiment 1 of an electromagnetic valve according to the present invention; and
Fig. 2 illustrates a schematic enlarged view of a part A of the electromagnetic valve in Fig. 1.

The above accompanying drawings have the following reference numerals:
10. valve seat; 11. valve cavity; 12. first through hole; 13. second through hole; 20. valve core; 21. balance hole; 30. driving assembly; 31. first magnetic adsorption structure; 32. second magnetic adsorption structure; 41. valve port; 431. first hole section; 432. second hole section; 42. sealing sleeve; 421. sealing sleeve body; 422. annular convex part; 4221. annular groove; 43. first sealing structure; 50. second sealing structure; 60. valve cover; 61. annular plate; 62. annular step; 63. valve cover body; 64. radial communication hole; 70. third sealing structure; 80. spring.

### Detailed Description of the Embodiments

It should be noted that in the case of no conflict, embodiments in the present invention and features in the embodiments can be combined with each other. The present invention will be described in detail below with reference to the accompanying drawings in conjunction with the embodiments.

It should be noted that unless otherwise specified, all technical and scientific terms used in the present invention have the same meanings as commonly understood by those skilled in the art of the present invention.

In the present invention, unless otherwise specified, the used directional words such as "upper and lower" usually refer to the directions shown in the accompanying drawings, or refer to the upright, vertical or gravity direction. Similarly, for the convenience of understanding and description, "left and right" usually refer to the left and right shown in the accompanying drawings, and "inside and outside" refer to the inside and outside relative to the contour of each component, but the above directional words are not intended to limit the present invention.

To solve the problem of medium leakage at the valve port easily occurring when a valve core blocks a valve port in the prior art, the present invention provides an electromagnetic valve.

### Embodiment 1

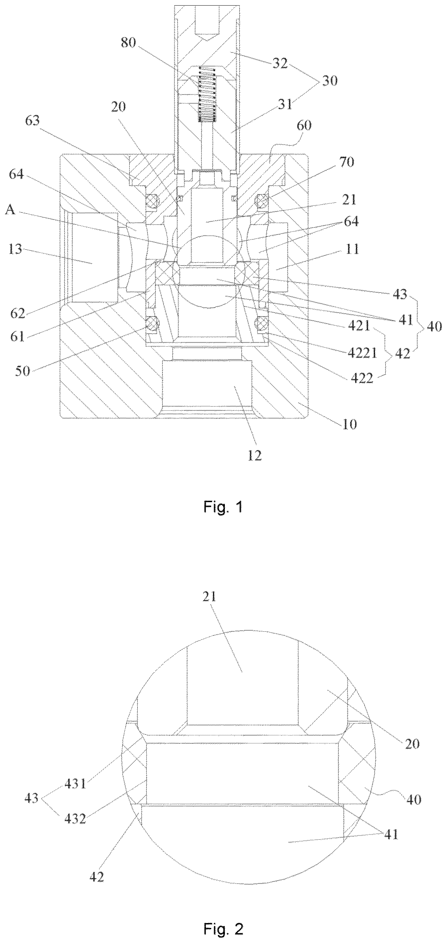

As shown in Fig. 1 and Fig. 2, an electromagnetic valve includes a valve cover 60, a valve core 20, a first sealing structure 43, a sealing sleeve 42 and a driving assembly 30. The valve core 20 is installed in the valve cover 60. The sealing sleeve 42 is installed at one end of the valve cover 60, and the first sealing structure 43 is arranged at an end of the sealing sleeve 42 close to the valve cover 60 and forms a valve port 41. The driving assembly 30 drives the valve core 20 to move along an axial direction to open or close the valve port 41. There is a hardness difference between a part matched with the valve core 20 on the first sealing structure 43 and the valve core 20.

By applying the technical solution in this embodiment, a soft seal is formed between the valve core 20 and the first sealing structure 43 to achieve sealing at a joint between the valve core 20 and the valve port 41, thereby preventing the medium entering the valve port 41 from leaking through the joint between the valve core 20 and the valve port 41 and then affecting the operation reliability of the electromagnetic valve, and solving the problem of medium leakage at the valve port easily occurring when the valve core blocks the valve port in the art known to inventors.

In some embodiments, the hardness of the first sealing structure 43 is lower than the hardness of the valve core 20 to form a soft seal. In this way, the above arrangement ensures soft contact between the first sealing structure 43 and the valve core 20, thereby reducing the structural wear of the first sealing structure 43 and the valve core 20, and prolonging the service life of the electromagnetic valve. Furthermore, during the movement of the valve core 20 towards a first through hole 12, the above arrangement can reduce the impact force between the first sealing structure 43 and the valve core 20, thereby avoiding the structural damage to the first sealing structure 43 and the valve core 20.

It should be noted that the hardness relationship between the first sealing structure 43 and the valve core 20 is not limited to this and can be adjusted according to working conditions and usage requirements.

In other implementations not shown in the accompanying drawings, the hardness of the valve core is lower than the hardness of the first sealing structure to form a soft seal. In this way, the above arrangement ensures soft contact between the first sealing structure and the valve core, thereby reducing the structural wear of the first sealing structure and the valve core, and prolonging the service life of the electromagnetic valve. Furthermore, during the movement of the valve core towards a first through hole, the above arrangement can reduce the impact force between the first sealing structure and the valve core, thereby avoiding the structural damage to the first sealing structure and the valve core.

In some embodiments, the hardness of the first sealing structure 43 is lower than the hardness of the sealing sleeve 42. In this way, the above arrangement ensures soft contact between the first sealing structure 43 and the sealing sleeve 42, thereby reducing the structural wear of the first sealing structure 43 and the sealing sleeve 42, and prolonging the service life of the first sealing structure 43. Furthermore, during the movement of the valve core 20 towards the first through hole 12, the above arrangement can reduce the impact force between the first sealing structure 43 and the sealing sleeve 42, thereby avoiding the structural damage to the first sealing structure 43 and the sealing sleeve 42.

As shown in Fig. 1, a valve seat 10 has a flow channel, the valve seat 10 also has a first through hole 12 and a second through hole 13, and the first through hole 12 and the second through hole 13 are both communicated with the flow channel. The valve core 20 is movably arranged in the flow channel to control the on/off state of the first through hole 12 and the second through hole 13. The driving assembly 30 comprises a first magnetic adsorption structure 31 and a second magnetic adsorption structure 32, the valve core 20 is connected to an end of the first magnetic adsorption structure 31 away from the second magnetic adsorption structure 32, a through hole is arranged in the first magnetic adsorption structure 31, a balance hole 21 is arranged in the valve core 20, and the balance hole 21 is communicated with the through hole. In this way, the through hole is communicated with the valve port 41 through the balance hole 21. When a medium enters the valve port 41, the medium can quickly enter the through hole through the balance hole 21 to effectively balance the pressure difference between two ends of the valve core 20.

In some embodiments, when the driving assembly 30 is in a second state, a first sealing structure 43 is arranged between the valve core 20 and the first through hole 12, and the first sealing structure 43 can seal a joint between the valve core 20 and the first through hole 12, thereby preventing the medium entering the first through hole 12 from leaking into the second through hole 13 through the joint between the valve core 20 and the first through hole 12 and then affecting the operation reliability of the electromagnetic valve, and solving the problem of medium leakage at the valve port easily occurring when the valve core 20 blocks the valve port in the prior art. Furthermore, when the driving assembly 30 is in a first state, the first through hole 12 can be communicated with the second through hole 13 through the valve port 41 of the first sealing structure 43 to ensure that the medium can flow into the second through hole 13 through the first through hole 12.

In some embodiments, the valve core 20 and the first magnetic adsorption structure 31 are of a split structure or an integrated structure. In this way, the above arrangement makes the processing manner of the valve core 20 and the first magnetic adsorption structure 31 more flexible to meet different usage requirements and working conditions, and also improve the processing flexibility of the staff.

In some embodiments, the balance hole 21 includes a first section close to the through hole and a second section away from the through hole, and the inner diameter of the second section is greater than the inner diameter of the first section. In this way, the above arrangement achieves a large-diameter internal balance function, and the size of the inner diameter of the second section can be adjusted according to the flow rate requirements of the valve port.

As shown in Fig. 1, the electromagnetic valve further includes a valve seat 10, wherein the valve seat 10 has an installation channel and a flow channel, and the valve cover 60, the sealing sleeve 42 and the first sealing structure 43 are all installed in the installation channel. In this way, the above arrangement makes the disassembly and assembly of the electromagnetic valve easier and simpler, reduces the difficulty in disassembly and assembly, and also achieves the miniaturization design of the electromagnetic valve to reduce the overall space occupied by the electromagnetic valve.

In some embodiments, the first sealing structure 43 is made of one of rubber, silicone and plastic. In this way, the above arrangement makes the material selection of the first sealing structure 43 more diverse to meet different usage requirements and working conditions. Specifically, the first sealing structure 43 is made of PTFE to achieve wear-resistant and soft-sealing effects.

In this embodiment, the first sealing structure 43 is arranged on the sealing sleeve 42 and is connected to the sealing sleeve 42. In this way, the first sealing structure 43 is fixed on the sealing sleeve 42. When the driving assembly 30 is in the second state, the valve core 20 abuts against the first sealing structure 43, the medium entering the first through hole 12 enters a valve cavity 11 through the valve port 41, and the above arrangement of the first sealing structure 43 can prevent the medium from leaking at a joint between the first sealing structure 43 and the valve core 20 and leaking into the second through hole 13, thereby improving the sealing reliability of the electromagnetic valve.

As shown in Fig. 2, the valve port 41 includes a first hole section 431 and a second hole section 432 which are connected to each other, and the first hole section 431 is communicated with an inner cavity of the sealing sleeve 42 through the second hole section 432, wherein the first hole section 431 is a tapered hole, and the inner diameter of the tapered hole gradually decreases along a direction from the first sealing structure 43 to the sealing sleeve 42. In this way, the above arrangement makes the action of the valve core 20 extending into the first hole section 431 easier, and also ensures that the valve core 20 can block the first hole section 431, thereby enabling the driving assembly 30 to be in the second state. When the driving assembly 30 is in the second state, at least a part of the valve core 20 extends into the tapered hole and abuts against a hole wall of the tapered hole.

In some embodiments, the central axis of the first hole section 431 and the central axis of the second hole section 432 are coaxially arranged. When the driving assembly 30 is in the second state, at least a part of the valve core 20 extends into the tapered hole and abuts against an inner wall of the tapered hole. If the medium enters the first through hole 12, the medium can enter the valve cavity 11 through the sealing sleeve 42 and the first sealing structure 43, and because the valve core 20 blocks the first hole section 431, the medium cannot enter the second through hole 13 through the joint between the first sealing structure 43 and the valve core 20.

In some embodiments, the electromagnetic valve further includes a second sealing structure 50, the second sealing structure 50 being arranged between the sealing sleeve 42 and the valve seat 10; or, the electromagnetic valve further comprises a third sealing structure 70, the third sealing structure 70 being arranged between the valve cover 60 and the valve seat 10; or, the electromagnetic valve further comprises a second sealing structure 50 and a third sealing structure 70, the second sealing structure 50 being arranged between the sealing sleeve 42 and the valve seat 10, and the third sealing structure 70 being arranged between the valve cover 60 and the valve seat 10.

As shown in Fig. 1, the electromagnetic valve further includes a second sealing structure 50. The second sealing structure 50 is arranged between the sealing sleeve 42 and the valve seat 10, wherein the second sealing structure 50 is made of rubber or silicone. In this way, the second sealing structure 50 is configured to seal a joint between the first sealing structure 43 and the valve cavity 11 to prevent the medium in the first through hole 12 from entering the joint between the second sealing structure 50 and the valve cavity 11, thereby further improving the sealing degree of the electromagnetic valve. Furthermore, the above arrangement makes the structure of the second sealing structure 50 simpler and easier to process and implement, thereby reducing the processing cost of the second sealing structure 50.

In some embodiments, the second sealing structure 50 is a sealing ring.

As shown in Fig. 1, the valve cover 60 has a radial communication hole 64 communicated with the second through hole 13 to ensure that the medium can flow smoothly in the electromagnetic valve.

As shown in Fig. 1, the electromagnetic valve further includes a third sealing structure 70, and the third sealing structure 70 is arranged between the valve cover 60 and the valve seat 10. In this way, the third sealing structure 70 is configured to seal the space above the radial communication hole 64 to prevent the medium from leaking at this position.

As shown in Fig. 1, the sealing sleeve 42 includes a sealing sleeve body 421 and an annular convex part 422 arranged on an outer circumferential surface of the sealing sleeve body 421, the annular convex part 422 has an annular groove 4221, and the second sealing structure 50 is arranged in the annular groove 4221. In this way, the above arrangement makes the disassembly and assembly of the second sealing structure 50 and the sealing sleeve 42 easier and simpler, and reduces the difficulty in disassembly and assembly of the second sealing structure 50 and the sealing sleeve 42. Furthermore, the above arrangement makes the structure of the sealing sleeve 42 simpler and easier to process and implement, thereby reducing the processing cost of the sealing sleeve 42.

As shown in Fig. 1, the first sealing structure 43 is limited between the valve cover 60 and the sealing sleeve 42, and the valve cover 60 comprises a valve cover body 63, an annular plate 61 and an annular step 62, wherein the annular plate 61 is arranged on one side of the valve cover body 63 away from the driving assembly 30 and abuts against the sealing sleeve 42; and the annular step 62 is arranged on an inner surface of the annular plate 61 and abuts against the first sealing structure 43, the annular step 62 and the annular plate 61 are surrounded to form an installation space, and the first sealing structure 43 is arranged in the installation space. In this way, the first sealing structure 43 is installed on the sealing sleeve 42 through the valve cover 60, so that the replacement, disassembly and assembly of the first sealing structure 43 are easier and simpler, and the difficulty in disassembly and assembly is reduced.

In some embodiments, the central axis of the annular plate 61 and the central axis of the annular step 62 are coaxially arranged, and the annular step 62 is pressed on the first sealing structure 43 to tightly press the first sealing structure 43 on the sealing sleeve 42, thereby preventing the medium from entering a joint between the first sealing structure 43 and the sealing sleeve 42.

As shown in Fig. 1, the electromagnetic valve further comprises a spring 80, and the spring 80 is arranged between the first magnetic adsorption structure 31 and the second magnetic adsorption structure 32.

In some embodiments, the first sealing structure 43 is provided with a first matching part, the valve core 20 is provided with a second matching part, one of the first matching part and the second matching part is a first protrusion, the other one of the first matching part and the second matching part is a first concave part, and the first protrusion extends into the first concave part and is matched with the first concave part in a limiting manner. In this way, the above arrangement of the first matching part and the second matching part improves the sealing reliability between the first sealing structure 43 and the valve core 20, and avoids the medium leakage at the valve port 41.

In some embodiments, the first matching part is the first protrusion, and the second matching part is the first concave part.

It should be noted that the structures of the first matching part and the second matching part are not limited to this and can be adjusted according to working conditions and usage requirements. Optionally, the first matching part is the first concave part, and the second matching part is the first protrusion.

### Embodiment 2

The difference between the electromagnetic valve in Embodiment 2 and the electromagnetic valve in Embodiment 1 is that the arrangement positions of the first sealing structures 43 are different.

In some embodiments, the first sealing structure is arranged on the valve core and is connected to the valve core. In this way, the above arrangement makes the arrangement position of the first sealing structure more flexible to meet different usage requirements and working conditions, and also improve the processing flexibility of the staff.

In some embodiments, when the driving assembly is in the second state, the surface of the first sealing structure facing the sealing sleeve is attached to the surface of the sealing sleeve facing the first sealing structure. In this way, the above arrangement can prevent the medium from entering a contact surface between the first sealing structure and the sealing sleeve, thereby preventing the medium from entering the second through hole and avoiding the leakage of the electromagnetic valve.

In some embodiments, the first sealing structure 43 is provided with a third matching part, an inner wall of the valve port 41 is provided with a fourth matching part, one of the third matching part and the fourth matching part is a second protrusion, the other one of the third matching part and the fourth matching part is a second concave part, and the first protrusion extends into the second concave part and is matched with the second concave part in a limiting manner. In this way, the above arrangement of the third matching part and the fourth matching part improves the sealing reliability between the first sealing structure 43 and the valve core 20, and avoids the medium leakage at the valve port 41.

In some embodiments, the third matching part is the second protrusion, and the fourth matching part is the second concave part.

It should be noted that the structures of the third matching part and the fourth matching part are not limited to this and can be adjusted according to working conditions and usage requirements. Optionally, the third matching part is the second concave part, and the fourth matching part is the second protrusion.

From the above description, it can be seen that the above embodiments of the present invention achieve the following technical effects:
A soft seal is formed between the valve core and the first sealing structure to achieve sealing at a joint between the valve core and the valve port, thereby preventing the medium entering the valve port from leaking through the joint between the valve core and the valve port and then affecting the operation reliability of the electromagnetic valve, and solving the problem of medium leakage at the valve port easily occurring when the valve core blocks the valve port in the prior art.

It is apparent that the embodiments described above are only a part of the embodiments of the present invention, but are not all of the embodiments. All other embodiments obtained by those of ordinary skill in the art based on the embodiments in the present invention without creative efforts shall fall within the scope of protection of the present invention.

It should be noted that the terms used here are only used for describing specific implementations, but are not intended to limit exemplary implementations according to the present invention. As used here, unless explicitly stated in the context, the singular form is also intended to include the plural form. In addition, it should also be understood that when the terms "include" and/or "comprise" are used in the specification, they indicate the presence of features, steps, operations, devices, assemblies, and/or combinations thereof.

## Claims

1. An electromagnetic valve, wherein the electromagnetic valve comprises:
a valve cover (60) and a valve core (20), the valve core (20) being disposed in the valve cover (60);
a first sealing structure (43) and a sealing sleeve (42), the sealing sleeve (42) being disposed at one end of the valve cover (60), and the first sealing structure (43) being disposed at an end of the sealing sleeve (42) which is close to the valve cover (60) so as to form a valve port (41); and
a driving assembly (30), the driving assembly (30) driving the valve core (20) to move along an axial direction to open or close the valve port (41);
there is a hardness difference between a part which is matched with the valve core (20) on the first sealing structure (43) and the valve core (20).

2. The electromagnetic valve as claimed in claim 1, wherein the hardness of the first sealing structure (43) is lower than the hardness of the valve core (20) to form a soft seal.

3. The electromagnetic valve as claimed in claim 1, wherein the hardness of the valve core (20) is lower than the hardness of the first sealing structure (43) to form a soft seal.

4. The electromagnetic valve as claimed in claim 1, wherein the hardness of the first sealing structure (43) is lower than the hardness of the sealing sleeve (42).

5. The electromagnetic valve as claimed in claim 1 or 4, wherein the first sealing structure (43) is made of one of rubber, silicone and plastic.

6. The electromagnetic valve as claimed in claim 1 or 4, wherein the first sealing structure (43) is limited between the valve cover (60) and the sealing sleeve (42), and the valve cover (60) comprises:
a valve cover body (63);
an annular plate (61), disposed on one side of the valve cover body (63) which is away from the driving assembly (30) and abutted against the sealing sleeve (42); and
an annular step (62), disposed on an inner surface of the annular plate (61) and abutted against the first sealing structure (43), the annular step (62) and the annular plate (61) being surrounded to form an installation space, and the first sealing structure (43) being disposed in the installation space.

7. The electromagnetic valve as claimed in claim 1 or 4, wherein the valve port (41) comprises a first hole section (431) and a second hole section (432) which are connected with each other, and the first hole section (431) is communicated with an inner cavity of the sealing sleeve (42) through the second hole section (432); the first hole section (431) is a tapered hole, and the inner diameter of the tapered hole gradually decreases along a direction from the first sealing structure (43) to the sealing sleeve (42).

8. The electromagnetic valve as claimed in claim 1, wherein the driving assembly comprises a first magnetic adsorption structure (31) and a second magnetic adsorption structure (32), the valve core (20) is connected with an end of the first magnetic adsorption structure (31) which is away from the second magnetic adsorption structure (32), a through hole is disposed in the first magnetic adsorption structure (31), a balance hole (21) is disposed in the valve core (20), and the balance hole (21) is communicated with the through hole.

9. The electromagnetic valve as claimed in claim 8, wherein the balance hole (21) comprises a first section and a second section, the first section is close to the through hole, and the second section is away from the through hole; the inner diameter of the second section is greater than the inner diameter of the first section.

10. The electromagnetic valve as claimed in claim 1, wherein the electromagnetic valve further comprises:
a valve seat (10), having an installation channel and a flow channel, and the valve cover (60), the sealing sleeve (42) and the first sealing structure (43) being all disposed in the installation channel.

11. The electromagnetic valve as claimed in claim 10, wherein the electromagnetic valve further comprises:
a second sealing structure (50), the second sealing structure (50) being disposed between the sealing sleeve (42) and the valve seat (10); or,
a third sealing structure (70), the third sealing structure (70) being disposed between the valve cover (60) and the valve seat (10); or,
a second sealing structure (50) and a third sealing structure (70), the second sealing structure (50) being disposed between the sealing sleeve (42) and the valve seat (10), and the third sealing structure (70) being disposed between the valve cover (60) and the valve seat (10).

12. The electromagnetic valve as claimed in claim 11, wherein the sealing sleeve (42) comprises a sealing sleeve body (421) and an annular convex part (422) which is disposed on an outer circumferential surface of the sealing sleeve body (421), the annular convex part (422) has an annular groove (4221), and the second sealing structure (50) is disposed in the annular groove (4221).

13. The electromagnetic valve as claimed in claim 1, wherein a first matching part is disposed on the first sealing structure (43), a second matching part is disposed on the valve core (20), one of the first matching part and the second matching part is a first protrusion, the other one of the first matching part and the second matching part is a first concave part, and the first protrusion extends into the first concave part and is matched with the first concave part in a limiting manner.
